(19) Europäisches Patentamt

European Patent Office

Office européen des brevets

(11) EP 0 456 451 B1

## (12) EUROPEAN PATENT SPECIFICATION

(45) Date of publication and mention
of the grant of the patent:
**27.03.1996 Bulletin 1996/13**

(51) Int Cl.$^6$: **H04N 1/40**

(21) Application number: **91304085.3**

(22) Date of filing: **07.05.1991**

(54) **Image reading apparatus**

Bildlesegerät

Appareil de lecture d'images

(84) Designated Contracting States:
**DE FR GB**

(30) Priority: **08.05.1990 JP 118017/90**

(43) Date of publication of application:
**13.11.1991 Bulletin 1991/46**

(73) Proprietor: **SHARP KABUSHIKI KAISHA
Osaka 545 (JP)**

(72) Inventors:
• **Nagano, Fumikazu
Yamato-Koriyama-shi, Nara-ken (JP)**
• **Tanaka, Seiichi
Osaka-shi, Osaka-fu (JP)**

(74) Representative: **Brown, Kenneth Richard et al
R.G.C. Jenkins & Co.
26 Caxton Street
London SW1H 0RJ (GB)**

(56) References cited:
**EP-B- 0 158 332      DE-A- 3 408 344
US-A- 4 771 333**

## Description

BACKGROUND OF THE INVENTION

1. Field of the Invention

The present invention relates to an image reading apparatus, such as an image scanner including a solid state image sensor, which can be used in a copying apparatus, a facsimile apparatus and so on.

2. Description of the Related Arts

In various kinds of image reading apparatuses used in a copying apparatus etc., there is an image reading apparatus which includes a solid state image sensor such as a CCD (Charged Coupled Device) sensor.

Such an image reading apparatus is provided with a fluorescent lamp, as a light source for example, for illuminating an original placed on an transparent original table. The CCD sensor is adapted to receive the reflected light from the original, namely the photo-electric charges are accumulated in the CCD sensor as a light information. The fluorescent lamp is controlled to be turned ON and OFF at a prescribed timing, while the electric charge is accumulated in the CCD sensor during the time interval when the fluorescent lamp is ON, and the accumulated electric charge is transferred out of the CCD sensor during the time interval when the fluorescent lamp is OFF.

In this kind of CCD sensor, the internal transferring efficiency, for example, the transferring efficiency from a photo-sensing portion to a register through a transferring gate (all provided in the CCD sensor), is about 95 %. Thus, the CCD output VO, which is equal to the integrated electric charges during the time interval when the lamp is ON, corresponds to 95 % of the true light information i.e. the total light information received by the CCD sensor. On the other hand, about 5 % of this true light information remains in the CCD sensor as a residual image information during this time interval and is outputted later as a residual image output RVO from the CCD sensor during the following time interval when the lamp is turned ON again for the next light receiving process.

This residual output RVO has a certain value more than zero even if the light inputted to the CCD sensor is little, while the value of the CCD output VO depends on the light intensity received by the CCD sensor i.e. the brightness or darkness of the illuminated original.

Accordingly, in case of reading a bright image portion of the original, namely when the CCD output VO is large, the residual output RVO is practically negligible, since the influence of the residual output RVO onto the true light information, which equals to "VO+RVO", becomes relatively small.

As described above, the image reading apparatus using such a CCD sensor, can in fact only utilize the above mentioned CCD output VO, which is about 95 % of the true light information originally received by the CCD sensor, while a certain amount of the true light information is wasted as the residual output RVO. Consequently, by use of this kind of image reading apparatus, though a bright image portion of the original can be clearly image-read, a dark image portion of the original cannot be clearly or precisely image-read due to the existence of the residual output RVO.

In order to overcome the above-mentioned drawback of this kind of image reading apparatus, an image reading technique is proposed in Japanese Patent Application Laying Open JP-A-51107013, in which a flickering frequency of a fluorescent lamp for illuminating an original and a main scanning frequency of a facsimile apparatus is synchronized so as to increase its image reading ability.

Another image reading technique is proposed in Japanese Patent Application Laying Open JP-A-5244113, in which a plurality of fluorescent lamps are employed and phases of flickering frequencies of the lamps are shifted to each other so as to increase its image reading ability.

Another image reading technique is proposed in Japanese Patent Publication JP-B-5204436, in which an absolute amount of electric charges accumulated in a potential well of a CCD sensor is increased by applying a bias light other than a reflected light to increase the transferring efficiency of the electric charges, so as to increase its image reading ability.

Another image reading technique is proposed in Japanese Patent Application Laying Open JP-A-58106948, in which residual electric charge in a CCD sensor is transferred out at a high speed during the time interval when another electric charge is accumulated in the CCD sensor, and, after a signal for starting a reading process, a transferring gate is opened as stopping a transferring clock signal at a high speed, to increase the transferring efficiency of the electric charges, so as to increase its image reading ability.

By use of the above-mentioned techniques, however, though the transferring efficiency of the electric charge as an output characteristic of the CCD sensor, may be increased to some extent, still a dark image portion of the original can not be well image-read due to the existence of the residual output of the CCD sensor, since there is a certain limit to reduce the residual electric charge in the CCD sensor.

SUMMARY OF THE INVENTION

It is therefore an object of the present invention to provide an image reading apparatus, which can read clearly and precisely a dark image portion of an original as well as a bright image portion. The invention is as set out in the claims.

According to the present invention, the above mentioned object can be achieved by an image reading apparatus, which is provided with a device for emitting light to an original, and a solid state image sensor for receiving reflected light from the original and transferring out a light information signal corresponding to the received light integrated during a predetermined transferring cycle. The image reading apparatus is characterized in a device for controlling the emitting device so as to emit the light during a time interval which is more than twice of the predetermined transferring cycle, and further controlling the solid state image sensor so as to transfer out a first light information signal integrated during a first interval of the light emitting time interval and transfer out a second light information signal integrated during a second interval of the light emitting time interval after the first interval, in such a timing that a residual image signal of the first light information signal is superimposed on the second light information signal.

According to the image reading apparatus of the present invention, the emitting device emits the light during the time interval which is more than twice of the predetermined transferring cycle under the control of the controlling device. On the other hand, the solid state image sensor receives the reflected light from the original. The solid state image sensor transfers out the first light information signal integrated during the first interval of the light emitting time interval, and then transfers out the second light information signal integrated during the second interval of the light emitting time interval. At this time, the residual image signal of the first light information signal is superimposed on the second light information signal under the control of the controlling device.

Here, the true light information signal received by the solid state image sensor during the second interval consists of the second light information signal and the residual image signal of the second light information signal. Here, the residual image signal of the second light information signal is similar to the residual image signal of the first light information signal, since they are both generated in the same solid state image sensor with respect to the same original and the same light. Thus, the overlapped output signal composed of the second light information signal and the residual image signal of the first light information signal is made closer in its value to the true light information signal during the second interval. Further, these residual image signals of the first and second light information signals, can be made even substantially same to each other just by prescribing the time lengths of the first interval and the second interval same to each other under the control of the controlling device. In this case, the overlapped output signal composed of the second light information signal and the residual image signal of the first light information signal, can be made substantially equal to the true light information signal during the second interval.

Consequently, by utilizing this overlapped output signal of the second light information signal and the residual image signal of the first light information signal, as an output of the image reading apparatus of the present invention, the clear and precise image information can be obtained, even in the case of reading a dark image portion of the original.

Further objects and advantages of the present invention will be apparent from the following description of the preferred embodiment of the invention as illustrated in the accompanying drawings.

## BRIEF DESCRIPTION OF THE DRAWINGS

Fig.1 is a schematic constructional view of an image reading apparatus as an embodiment of the present invention;

Fig.2 is a schematic front view of an optical system of the image reading apparatus of Fig.1;

Fig.3 is a schematic constructional view of a CD sensor of the image reading apparatus of Fig.1;

Fig.4 is a timing chart of various signals and pulses of the image reading apparatus of Fig.1;

Fig.5 is a circuit diagram of the analogue processing circuit of Fig.1;

Fig.6 is a timing chart explaining the relationship between the transferring pulse and the control signal and the CCD output of the image reading apparatus of Fig.1;

Fig.7 is a graph showing the relationship between the light intensity and the CCD output in the image reading apparatus of the Fig.1;

Fig.8 is a graph showing the relationship between the light intensity and the CCD output in comparison examples;

Fig.9 is a timing chart explaining the relationship between the transferring pulse and the control signal and the CCD output in a comparison example; and

Fig.10 is another timing chart explaining the relationship between the transferring pulse and the control signal and the CCD output in a comparison example.

## DETAILED DESCRIPTION OF THE PREFERRED EMBODIMENT

A preferred embodiment of the present invention will be described below with reference to the accompanying drawings.

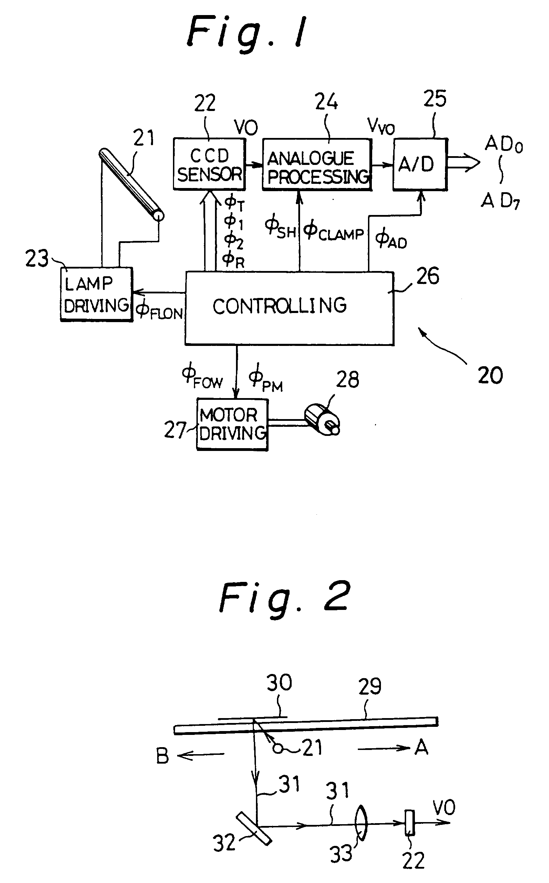

In Fig.1, an image reading apparatus 20 is provided with a fluorescent lamp 21, a CCD sensor 22, a lamp driving circuit 23, an analogue process circuit 24, an A/D converter 25, a controlling device 26, a motor driving circuit 27 and a pulse motor 28.

The image reading apparatus 20 is adapted to emit a light from the lamp 21 onto an original while moving the original by the pulse motor 28, receive a reflected light from the original by the CCD sensor 22, and output a digital image information signal from the A/D converter 25 as described in detail hereinbelow.

The lamp 21 of a linear shape is connected to the lamp driving circuit 23. The output terminal of the CCD sensor 22 is connected to the input terminal of the analogue processing circuit 24, where the CCD sensor 22 outputs a CCD output VO in an analogue voltage form. The output terminal of the analogue processing circuit 24 is connected to the input terminal of the A/D converter 25, where the analogue processing circuit 24 outputs a corrected CCD output $V_{VO}$ in an analogue voltage form. The A/D converter 25 converts the output $V_{VO}$ to digital signals $AD_0$ to $AD_7$ and outputs these signals as image information signals. The pulse motor 28 is connected to the motor driving circuit 27.

The lamp driving circuit 23, the CCD sensor 22, the analogue processing circuit 24, the A/D converter 25 and the motor driving circuit 27 are all controlled by the controlling device 26. Namely, a control signal $\Phi_{FLON}$ generated by the controlling device 26 is inputted to the lamp driving circuit 23. A transfer pulse $\Phi_T$, clock pulses $\Phi_1$ and $\Phi_2$ and a reset pulse $\Phi_R$ generated by the controlling device 26 are inputted to the CCD sensor 22. A sample holding pulse $\Phi_{SH}$ and a clamp pulse $\Phi_{CLAMP}$ generated by the controlling device 26 are inputted to the analogue processing circuit 24. An A/D converting signal $\Phi_{AD}$ generated by the controlling device 26 is inputted to the A/D converter 25. A direction control signal $\Phi_{FOW}$ and a step transport signal $\Phi_{PM}$ generated by the controlling device 26 are inputted to the motor driving circuit 27. The timings and the shapes of these pulses and signals are controlled by the controlling device 26 so as to enable the image reading operation as described in detail later.

The lamp driving circuit 23 drives the lamp 21 so as to emit a light during a prescribed time interval based on the signal $\Phi_{FLON}$. A light source such as a LED (Light Emitting Diode) etc., may be utilized in place of the lamp 21 as long as it has an appropriate switching characteristic. Further, a light chopper device may be utilized which mechanically flickers the light emitted from the lamp 21 or the LED.

The motor driving circuit 27 drives the pulse motor 28 so as to move an original table (not shown), on which the original is placed, in a prescribed manner based on the signals $\Phi_{FOW}$ and $\Phi_{PM}$.

The image reading apparatus 20 is equipped as an image scanner in a copying apparatus, a facsimile apparatus etc. for reading an image of the original set on the original table of such an apparatus. Fig.2 shows the positions of the lamp 21 and the CCD sensor 22 of the image reading apparatus 20 equipped in such an apparatus.

In Fig.2, an original 30 is placed on an original table 29. The table 29 is made from transparent material such as glass, and is adapted to be moved together with the original 30 in the directions indicated by arrows A and B, by the pulse motor (not shown). The lamp 21 in the linear shape is disposed such that the longitudinal axis thereof is perpendicular to the sheet face of Fig.2.

A light 31 in a linear shape is emitted from the lamp 21, transmitted through the table 29 onto the original 30. Then, the light 31 is reflected from the original 30 as a light information corresponding to the image on the original 30. The reflected light 31 is then transmitted through the table 29, reflected by a mirror 32, and condensed by a lens 33, which may consist of a both side convex lens or a one side convex lens. Then, the light 31 is finally received by the sensing faces of the CCD sensor 22, which are arranged in such an array as to cover the reflected light 31 in the linear shape.

The received light 31 is then accumulated as the photoelectric charges in the CCD sensor 22, and is transferred as the CCD output VO to the analogue processing circuit (not shown).

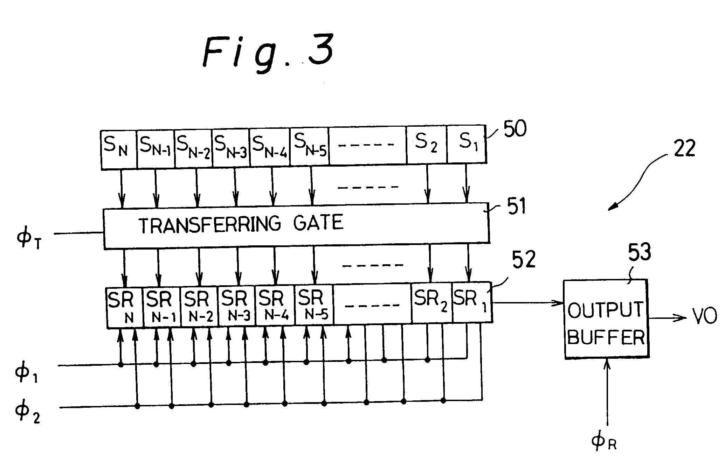

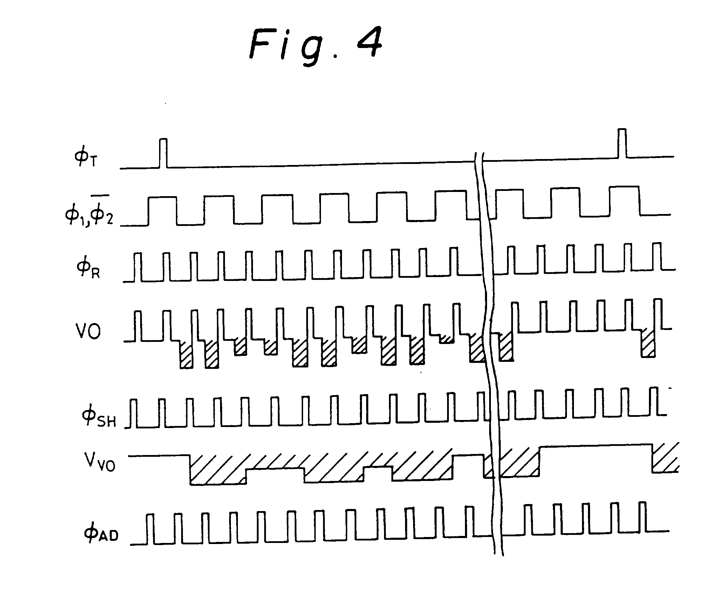

The constructional example of the CCD sensor 22 and its operation are explained next, referring to Figs.3 and 4.

Fig.3 shows an electrical construction of the CCD sensor 22, while Fig.4 shows a timing chart of the control pulses and signals in the image reading apparatus.

In Fig.3, the CCD sensor 22 is constructed as a CCD line sensor. The CCD sensor 22 is provided with a sensing portion 50, a transferring gate circuit 51, an analogue shift register 52 ($SR_1$ to $SR_N$) and an output buffer 53. The sensing portion 50 includes a plurality of sensing elements $S_1$ to $S_N$, each having the sensing face, arranged in an array. The number N may be 5,000, for example. The elements $S_1$ to $S_N$ are connected with the analogue shift register 52 via the transferring gate circuit 51. The output of the analogue shift register 52 is connected with the output buffer 53.

The photo-electric charges accumulated in sensing elements $S_1$ to $S_N$ are started to be transferred through the transferring gate circuit 51 to the analogue shift register 52 when the pulse $\Phi_T$ is inputted to the transferring gate circuit 51. The N photo-electric charges, which have been transferred to the analogue shift register 52, are then transferred to the output buffer 53 sequentially in synchronization with the pulses $\Phi_1$ and $\Phi_2$.

The transferring efficiency from the sensing portion 50 to the analogue shift register 52 may be about 95 %, for example. Thus, a residual photo-electric charge exists in the CCD sensor 22. However, in the present embodiment, because this residual photo-electric charge is not wasted but used as a portion of effective light information signal, as described later in detail, the CCD sensor 22 with this transferring efficiency 95 % or even less can be used without substantially degrading the image-reading ability especially with respect to a dark image portion. The transferring efficiency of the analogue shift register 52 to the output buffer 53 may be about 99.9999%, for example.

The electric charge transferred to the output buffer 53 is reset by the pulse $\Phi_R$. The CCD output VO corresponding to each transferred electric charge and each pulse $\Phi_R$ is outputted from the output buffer 53 to the analogue processing circuit (not shown). The timing and the shapes of these pulses $\Phi_T$, $\Phi_1$, $\overline{\Phi}_2$, $\Phi_R$ and the output VO are shown in Fig.4.

Then, this output VO is sample-held on the basis of the pulse $\Phi_{SH}$ to be made into the corrected CCD output

$V_{VO}$ by the analogue processing circuit 24 of Fig.1. Then, the output $V_{VO}$ is converted on the basis of the pulse $\Phi_{AD}$ into digital signals $AD_0$ to $AD_7$ by the A/D converter 25 of Fig.1.

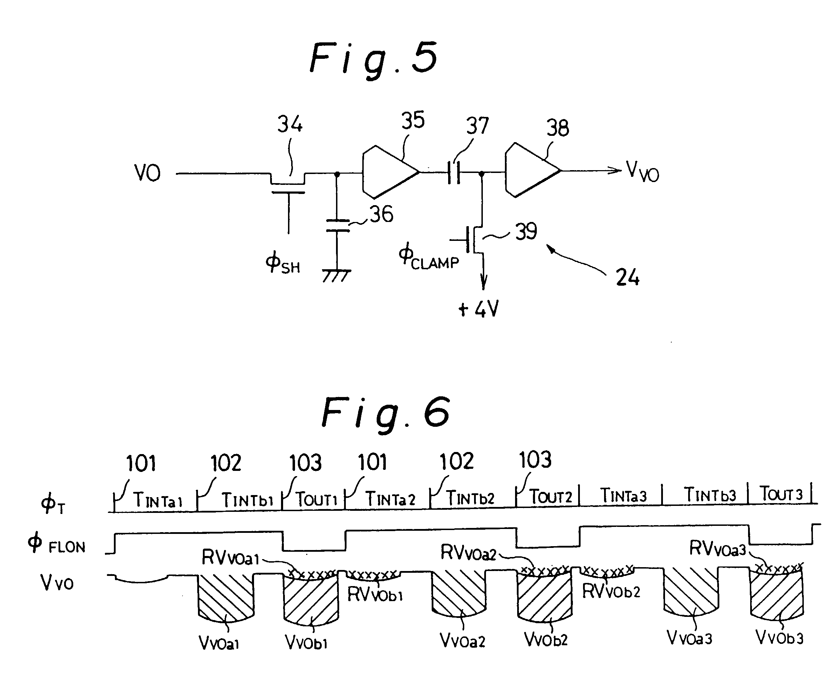

In Fig.1, the analogue processing circuit 24 is adapted to correct the output VO from the CCD sensor 22 according to the signal $\Phi_{SH}$ from the controlling device 26. The constructional example of the analogue processing circuit 24 is explained next referring to Figs. 4 and 5.

In Fig.5, the analogue processing circuit 24 is provided with MOS (Metal Oxide Semiconductor) transistors 34 and 39, voltage followers 35 and 38 and capacitors 36 and 37. The output VO from the CCD sensor (not shown) is inputted to the one side of the transistor 34 serving as an analogue switch. The other side of the transistor 34 is connected with both of an input terminal of the follower 35 and one side of the capacitor 36. The pulse $\Phi_{SH}$ is inputted to the gate electrode of the transistor 34. The other side of the capacitor 36 is grounded.

The output of the follower 35 is coupled to both of an input terminal of the follower 38 and one side of the transistor 39 serving as an analogue switch via the capacitor 37. The pulse $\Phi_{CLAMP}$ is inputted to the gate electrode of the transistor 39. DC (Direct Current) voltage of +4 volt, for example, is applied to the other side of the transistor 39, so that a clamping circuit is constructed. This clamping circuit is adapted to correct the DC level of the output VO from the CCD sensor, which is coupled thereto in an AC (Alternative Current) coupling manner by means of capacitors and resistors, and in which the DC component of the image information i.e. the image information corresponding mainly to the background portion of the sensed image is lost during the image reading operation. Accordingly, the output $V_{VO}$, which is generated by applying the DC correction process as well as the amplifying process onto the output VO, is outputted from the follower 38. The timing and the shapes of the pulse $\Phi_{SH}$ and the output $V_{VO}$ are shown in Fig.4.

In the above-mentioned constructional example, a bipolar transistor or a diode may be utilized in place of the MOS transistors 34 and 39, so as to construct the analogue switches.

In Fig.1, the A/D converter 25 is adapted to convert the output $V_{VO}$ from the analogue processing circuit 24 according to the signal $\Phi_{AD}$ from the controlling device 26. The A/D converter 25 converts the output $V_{VO}$ in the analogue form within a range between +2 volt and +4 volt to the signal $AD_0$ to $AD_7$ in the digital form of 8 bits (256 stages), for example. In this case, when the level of the output VO out of the CCD sensor 22 is +4 volt (which corresponds to the black level, i.e. the voltage level without any illumination of the original), the logical levels of the $AD_0$ to $AD_7$ out of the A/D converter 25 are made all "0" (zero). When the level of the output VO out of the CCD sensor 22 is +2 volt (which corresponds to the white level, i.e. the saturated voltage level with the illumination of the original), the logical level of the $AD_0$

to $AD_7$ out of the A/D converter 25 are made all "1" (one). The A/D converter 25 may be adapted to output the digital signal of 16 bits, 32 bits etc. in place of 8 bits, while voltage range of the output VO other than +2 volt to +4 volt may be utilized in the image reading apparatus 20.

In Fig.1, the motor driving circuit 27 is adapted to drive the pulse motor 28 according to the signals $\Phi_{FOW}$ and $\Phi_{PM}$ from the controlling device 26, as following. Namely, when the $\Phi_{FOW}$ is at the logical level of "0", the motor driving circuit 27 drives the pulse motor 28 to move the table 29 in the direction indicated by the arrow A as shown in Fig.2, with a moving amount corresponding to the pulse numbers of the signal $\Phi_{PM}$. When the $\Phi_{FOW}$ is at the logical level of "1", the motor driving circuit 27 drives the pulse motor 28 to move the table 29 in the direction indicated by the arrow B as shown in Fig.2, with a moving amount corresponding to the pulse numbers of the signal $\Phi_{PM}$. A DC motor may be utilized in place of the pulse motor 28 so as to move the table 29.

The controlling device 26 may consist of a microprocessor, for example, to control each circuit in the image reading apparatus 20 as described above.

The manner of control of the controlling device 26 will be explained in detail hereinbelow referring to Fig.6, which shows the relationship between the timing of the signal $\Phi_{FLON}$ and the timing of the output $V_{VO}$ on the basis of the pulse $\Phi_T$, with respect to each sensing portion of the CCD sensor. For convenience sake, the timings are indicated with respect to one sensing portion of the CCD sensor.

In Fig.6, $T_{INTa1}$, $T_{INTb1}$, $T_{INTa2}$, $T_{INTb2}$, ... indicate the time interval when the fluorescent lamp is ON, $T_{OUT1}$, $T_{OUT2}$, ... indicate the time interval when the fluorescent lamp is OFF, wherein such a condition is set that $T_{INTa1} = T_{INTa2}$, $T_{INTb1} = T_{INTb2}$, ...in order to obtain the CCD output which is substantially same as the true light information received by the CCD sensor as explained below.

The signal $\Phi_{FLON}$ to be inputted to the lamp driving circuit, is turned to be ON and OFF in synchronization with the pulse $\Phi_T$. Namely, the signal $\Phi_{FLON}$ is triggered to be formed by the pulse $\Phi_T$ in a counter (a ternary counter, for example) included in the controlling device 26 of Fig.1.

The logical level of this counter in the controlling device 26, i.e. the logical level of the signal $\Phi_{FLON}$ is turned to be "1" at the timing of every first pulse $\Phi_T$ 101, is not turned at the timing of every second pulse $\Phi_T$ 102, and is turned to be "0" at the timing of every third pulse $\Phi_T$ 103, and this series of the logical level turning processes is repeatedly performed as shown in Fig.6. Consequently, the fluorescent lamp is turned to be ON continuously during the time intervals $T_{INTa1}$ and $T_{INTb1}$.

An output $V_{VOa1}$, integrated in the CCD sensor corresponding to the light emission during the time interval $T_{INTa1}$, is outputted from the CCD sensor through the analogue processing circuit during the time interval $T_{INTb1}$, and an output $V_{VOb1}$, integrated in the CCD sensor during the time interval $T_{INTb1}$, is outputted from the CCD sensor during the time interval $T_{OUT1}$, as indicated respectively by the corresponding hatched areas (corresponding to the integration results), in Fig.6.

On the other hand, a residual output $RV_{VOa1}$ of the output $V_{VOa1}$, and the residual output $RV_{VOb1}$ of the output $V_{VOb1}$ are also indicated by the corresponding areas in the same chart.

In the same manner, outputs $V_{VOa2}$ and $V_{VOb2}$, integrated in the CCD sensor during the time intervals $T_{INTa2}$ and $T_{INTb2}$ respectively, and residual outputs $RV_{VOa2}$ and $RV_{VOb2}$ of the outputs $V_{VOa2}$ and $V_{VOb2}$ respectively, are also indicated by the corresponding areas in Fig.6.

As shown in Fig.6, the output $RV_{VOa1}$ is superimposed on the output $V_{VOb1}$. In the same manner, the outputs $RV_{VOa2}$, $RV_{VOa3}$, ... are superimposed on the outputs $V_{VOb2}$, $V_{VOb3}$,..., respectively. That is to say, in the present embodiment, by emitting the light from the fluorescent lamp during the time intervals $T_{INTan}$ and $T_{INTbn}$ $(n=1,2,3...)$, which can make the CCD sensor charged twice, and by transferring out twice the photo-electric charge accumulated in the CCD sensor with respect to the time intervals $T_{INTan}$ and $T_{INTbn}$, the output $RV_{VOan}$ and the output $V_{VObn}$ can be overlapped with each other.

At this time, the true light information for the interval $T_{INTa1}$ equals to the total output value of "$V_{VOa1}$ + $RV_{VOa1}$". In other words, the output $V_{VOa1}$ is different from the true light information due to the existence of the residual photo-electric charges in the CCD sensor, and the influence of this residual photo-electric charges becomes large when the value of the output $V_{VOa1}$ is small, i.e. when a dark portion of the original is image-sensed by the CCD sensor. Consequently, the use of the output $V_{VOa1}$ as the light information is not suitable especially in the case of image-reading the dark portion of the original, just in the same manner as in the aforementioned related art techniques.

On the other hand, the true light information for the interval $T_{INTb1}$ equals to the total output value of "$V_{VOb1}$ + $RV_{VOb1}$". Here, in the present embodiment, the value of the output $RV_{VOb1}$ is set to be substantially equal to the value of the output $RV_{VOa1}$, since the time interval $T_{INTa1}$ is set to be equal to the time interval $T_{INTb1}$ by setting the prescribed timing of the pulse $\Phi_T$. Accordingly, the output "$V_{VOb1}$ + $RV_{VOa1}$" becomes to be substantially equal to the true light information for the time interval $T_{INTb1}$. Thus, even if the value of the output $V_{VOb1}$ is small, i.e. in the case of image-reading the dark portion of the original, the influence of the residual photo-electric charges in the CCD sensor is practically negligible. Instead, the output $RV_{VOa1}$ is utilized as the useful information as composing the portion of the light information signal.

Consequently, a compensated CCD output $V_{VOCn}$, which is here defined as "$V_{VObn}$ + $RV_{VOan}$" $(n=1,2,3...)$, can be used as the light information signal which maintains a quite precise image information as for the original, regardless of the darkness of the original.

The operation of the image reading apparatus of the present invention will be described hereinbelow, referring to Figs.1 and 6.

In Fig.1, the lamp 21 emits intermittently the light according to the signal $\Phi_{FLON}$ of Fig.6 from the controlling device 26. Namely, the light is emitted during the time intervals $T_{INTan}$ and $T_{INTbn}$, and is not emitted during the interval $T_{OUTn}$ $(n=1,2,3...)$ according to the signal $\Phi_{FLON}$. The original is illuminated by the lamp 21, and the reflected light from the original is received by the CCD sensor 22.

On the other hand, the pulse $\Phi_T$ of Fig.6 is inputted to the transferring gate circuit in the CCD sensor 22. The pulses $\Phi_1$ and $\Phi_2$ are inputted to the shift register in the CCD sensor 22. The pulse $\Phi_R$ is inputted to the output buffer in the CCD sensor 22.

The light received by the CCD sensor 22 in synchronization with the pulses $\Phi_1$ and $\Phi_2$, is converted to the N photo-electric charges corresponding to the image to be read, and is successively transferred to the output buffer in the CCD sensor 22. The transferred photo-electric charges are reset one after another in the output buffer in synchronization with the pulse $\Phi_R$, and are successively transferred to the analogue processing circuit 24 as the output VO.

The output VO from the CCD sensor 22 is corrected in its DC level etc. by the analogue processing circuit 24 in synchronization with the pulses $\Phi_{SH}$ and $\Phi_{CLAMP}$, and is then transferred to the circuit 25 as the output $V_{VO}$ of Fig.6.

The output $V_{VO}$ outputted from the analogue processing circuit 24 is converted to the digital signal $AD_0$ to $AD_7$ by the A/D converter 25 in synchronization with the pulse $\Phi_{AD}$.

Here, as aforementioned, the compensated CCD output $V_{VOCn}$ $(= V_{VObn} + RV_{VOan})$ appearing in the output $V_{VO}$ at the prescribed interval $T_{OUTn}$ $(n=1,2,3...)$ corresponds to the true light information of the original. Thus, the A/D converter may be adapted to apply its converting operation just on this compensated CCD output $V_{VOCn}$ inputted thereto at its prescribed timing and ignore the output $V_{VOan}$.

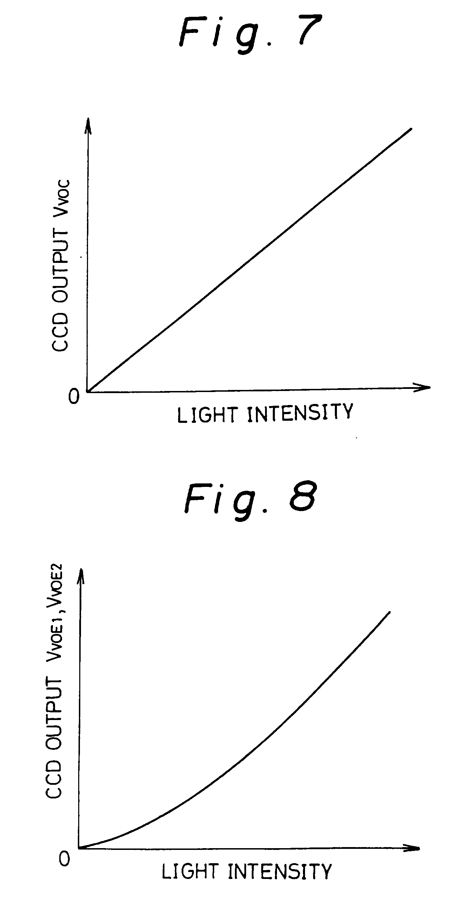

Fig.7 shows the relationship between the compensated CCD output $V_{VOC}$ and the light intensity of the reflected light received by the CCD sensor of the present embodiment. From Fig.7, it is understood that the relationship is substantially linear with respect to the low light intensity region as well as the high light intensity region, and thus even the dark portion of the original can be clearly and precisely image-read by the present embodiment.

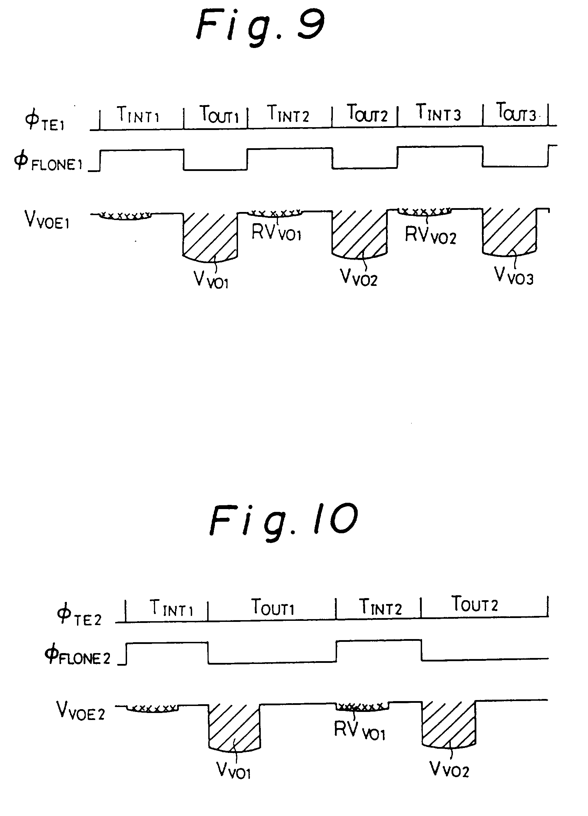

As a comparison, the relationship of an output $V_{VOE1}$, $V_{VOE2}$ of a CCD sensor and a light intensity of a reflected light received by this CCD sensor, is shown in Fig.8 in comparison examples, in which the CCD sensor is operated by pulses $\Phi_{TE1}$ and $\Phi_{FLONE1}$ as shown in Fig.9 or by pulses $\Phi_{TE2}$ and $\Phi_{FLONE2}$ as shown in Fig.10, which are utilized in place of the pulses $\Phi_T$ and

$\Phi_{FLON}$ in Fig.6 of the present embodiment. Figs.9 and 10 also show the output $V_{VOE1}$ and $V_{VOE2}$ of the CCD sensor in the corresponding comparison examples. The example of Fig.10 has a relatively long time interval $T_{OUT}$ corresponding to the example of Fig.9, and thus it is more advantageous in that the temperature increase in the image reading apparatus can be effectively avoided compared with the example of Fig.9.

Same type of relationship between the CCD output and the light intensity is established in both of these comparison examples as shown in Fig.8.

From Fig.8, it is understood that the relationship is more or less linear in the high light intensity region; however, it is not linear any more as the light intensity approaches to zero. The change in the output of the CCD sensor becomes very small with respect to the change of the light intensity, in this low light intensity region. Thus, the dark portion of the original can not be clearly or precisely image-read in these comparison examples. This is because the aforementioned residual photo-electric charge in the CCD sensor, which has about 5 % amount of the true light information, is not utilized as the signal as in the present embodiment described above. In addition, the output $V_{VOa1}$ shown in Fig.6 of the present embodiment has also the same characteristic curve of Fig.8, since the output $V_{VOa1}$ is different from the true light-information due to the existence of the residual output $RV_{VOa1}$ of Fig.6.

Consequently, as the output signal of the image reading apparatus 20, this compensated CCD output $V_{VOCn}$ is utilized in the copying apparatus, the facsimile apparatus etc. which employs the image reading apparatus 20 of the present embodiment. Then, quite precise and clear image of the original can be reproduced by use of this compensated CCD output $V_{VOCn}$ as the image information signal.

In the above-described embodiment, though the output of the CCD sensor is transferred out twice in one continuous light emitting process, the output of the CCD sensor may be transferred out more than twice as long as the residual output is adapted to be superimposed on the light information of the following output so as to form the compensated CCD output.

As described above, the present embodiment can generate an image information signal which is quite precise with respect to the image of the original regardless of its darkness, and can be used in various kinds of apparatuses such as a copying apparatus and a facsimile apparatus.

Many widely different embodiments of the present invention may be constricted without departing from the scope of the present invention. It should be understood that the present invention is not limited to the specific embodiments described in this specification, except as defined in the appended claims.

## Claims

1. An image reading apparatus, comprising:

   means (21) for emitting light to an original; and a solid state image sensor (22) for receiving a reflected light from said original and transferring out a light information signal corresponding to said received light integrated during a predetermined transferring cycle; characterized by means (26) for controlling said emitting means so as to emit said light during a time interval which is more than twice of said predetermined transferring cycle, and further controlling said solid state image sensor (22) so as to transfer out a first light information signal ($V_{VOa1}$) integrated during a first interval ($T_{INTa1}$) of said time interval and transfer out a second light information signal integrated during a second interval ($T_{INTb1}$) of said time interval ($V_{VOb1}$) after said first interval, in such a timing that a residual image signal ($RV_{VOa1}$) of said first light information signal ($V_{VOa1}$) is superimposed on said second light information signal ($V_{VOb1}$).

2. An image reading apparatus according to Claim 1, wherein said first and second intervals are set to be equal in time length to each other.

3. An image reading apparatus according to Claim 1, wherein said solid state image sensor comprises a CCD sensor.

4. An image reading apparatus according to Claim 1, wherein said solid state image sensor comprises a plurality of sensing portions, a transferring gate means, an analogue shift register and an output buffer.

5. An image reading apparatus according to Claim 1, wherein said emitting means comprises a lamp and a lamp driving circuit which drives said lamp according to a control signal of said controlling means.

6. An image reading apparatus according to Claim 1, wherein said controlling means comprises a microprocessor.

7. An image reading apparatus according to Claim 1, further comprising an A/D converter for converting said light information signal of analogue form into a digital signal.

8. An image reading apparatus comprising means for illuminating an original;

   image sensing means for receiving light from the illuminated original and for outputting image signals generated in accordance with light received during a predetermined light integration period; and

control means for controlling the illuminating means and the image sensing means characterized in that said control means is operable so that in each of a succession of image reading cycles the original is illuminated during an illumination period and the image sensing means outputs first and second image signals corresponding to first and second successive light integration periods both lying within said illumination period, such that the image signal corresponding to the second light integration period includes a residual image signal portion which is due to light integration in the first light integration period and which was not output at the end of said first light integration period.

**Patentansprüche**

1. Bildlesegerät mit:

   - einer Einrichtung (21) zum Emittieren von Licht auf eine Vorlage und
   - einem Festkörper-Bildsensor (22) zum Empfangen von an der Vorlage reflektiertem Licht und zum Übertragen eines Lichtinformationssignals nach außen, das dem empfangenen Licht entspricht, wie es während eines vorgegebenen Übertragungszyklus integriert wurde; **gekennzeichnet durch**
   - eine Einrichtung (26) zum Steuern der Emissionseinrichtung in solcher Weise, daß diese in einem Zeitintervall Licht emittiert, das mehr als das Doppelte des vorgegebenen Übertragungszyklus ist, und ferner zum Steuern des Festkörper-Bildsensors (22) so, daß dieser ein während des ersten Intervalls ($T_{INTa1}$) des Zeitintervalls integriertes erstes Lichtinformationssignal ($V_{VOa1}$) nach außen überträgt und er ein während eines zweiten Intervalls ($T_{INTb1}$) des Zeitintervalls, das nach dem ersten Zeitintervall liegt, integriertes zweites Lichtinformationssignal ($V_{VOb1}$) nach außen überträgt, und zwar mit solcher zeitlicher Lage, daß ein Restbildsignal ($RV_{VOa1}$) des ersten Lichinformationssignals ($V_{VOa1}$) dem zweiten Lichtinformationssignal ($V_{VOb1}$) überlagert ist.

2. Bildlesegerät nach Anspruch 1, bei dem das erste und zweite Intervall so eingestellt sind, daß sie dieselbe zeitliche Länge aufweisen.

3. Bildlesegerät nach Anspruch 1, bei dem der Festkörper-Bildsensor ein CCD-Sensor ist.

4. Bildlesegerät nach Anspruch 1, bei dem der Festkörper-Bildsensor mehrere Leseabschnitte, eine Übertragungstorein-richtung, ein analoges Schieberegister und einen Ausgangs-puffer aufweist.

5. Bildlesegerät nach Anspruch 1, bei dem die Emissionseinrichtung eine Lampe und eine Lampentreiberschaltung aufweist, die die Lampe entsprechend einem Steuersignal von der Steuereinrichtung betreibt.

6. Bildlesegerät nach Anspruch 1, bei dem die Steuereinrichtung einen Mikroprozessor aufweist.

7. Bildlesegerät nach Anspruch 1, ferner mit einem A/D-Um-setzer zum Umsetzen des Lichtinformationssignals von analoger Form in ein digitales Signal.

8. Bildlesegerät mit

   - einer Einrichtung zum Beleuchten einer Vorlage;
   - einer Bildleseeinrichtung zum Empfangen von Licht von der beleuchteten Vorlage und zum Ausgeben von Bildsignalen, wie sie entsprechend dem Licht erzeugt wurden, das während einer vorgegebenen Lichtintegrationsperiode empfangen wurde; und
   - einer Steuereinrichtung zum Ansteuern der Beleuchtungseinrichtung und der Bildleseeinrichtung;
   **dadurch gekennzeichnet, daß** die Steuereinrichtung so betreibbar ist, daß die Vorlage in jeder Folge von Bildlesezyklen während einer Beleuchtungsperiode beleuchtet wird und die Bildleseeinrichtung ein erstes und ein zweites Bildsignal ausgibt, die der ersten und zweiten aufeinanderfolgenden Lichtintegrationsperiode entsprechen, die beide innerhalb der Beleuchtungsperiode liegen, so daß das der zweiten Lichtintegrationsperiode entsprechende Bildsignal einen Restbildsignalanteil enthält, der auf der Lichtintegration in der ersten Lichtintegrationsperiode beruht und am Ende der ersten Lichtintegrationsperiode nicht ausgegeben wurde.

**Revendications**

1. Appareil de lecture d'images, comprenant:

   des moyens (21) pour émettre de la lumière en direction d'un original; et
   un capteur d'images à l'état solide (22) pour recevoir la lumière réfléchie en provenance dudit original et transférer un signal d'informations de lumière correspondant à ladite lumière reçue intégrée pendant un cycle de transfert prédéterminé; caractérisé par:

des moyens (26) pour commander lesdits moyens d'émission de façon à émettre ladite lumière pendant un intervalle de temps qui est égal à plus du double dudit cycle de transfert prédéterminé, et, en outre, pour commander ledit capteur d'images à l'état solide (22) de façon à transférer un premier signal d'informations de lumière ($v_{VOa1}$) intégré pendant un premier intervalle ($T_{INTa1}$) dudit intervalle de temps et transférer un second signal d'informations de lumière ($V_{VOb1}$) intégré pendant un second intervalle ($T_{INTb1}$) dudit intervalle de temps après ledit premier intervalle, suivant un rythme tel qu'un signal d'image résiduel ($RV_{VOa1}$) dudit premier signal d'informations de lumière ($V_{VOa1}$) soit superposé audit second signal d'informations de lumière ($V_{VOb1}$).

2. Appareil de lecture d'images selon la revendication 1, dans lequel lesdits premier et second intervalles sont choisis de façon à avoir une durée identique.

3. Appareil de lecture d'images selon la revendication 1, dans lequel ledit capteur d'images à l'état solide se compose d'un capteur à CCD.

4. Appareil de lecture d'images selon la revendication 1, dans lequel ledit capteur d'images à l'état solide comprend une multiplicité de parties de captation, un moyen formant porte de transfert, un registre de décalage analogique et un tampon de sortie.

5. Appareil de lecture d'images selon la revendication 1, dans lequel lesdits moyens d'émission comprennent une lampe et un circuit d'activation de lampe qui active ladite lampe en fonction d'un signal de commande desdits moyens de commande.

6. Appareil de lecture d'images selon la revendication 1, dans lequel lesdits moyens de commande comprennent un micro-processeur.

7. Appareil de lecture d'images selon la revendication 1, comprenant, en outre, un convertisseur analogique/numérique pour convertir ledit signal d'informations de lumière de forme analogique sous une forme numérique.

8. Appareil de lecture d'images comprenant des moyens pour éclairer un original;

des moyens de captation d'images pour recevoir une lumière en provenance de l'original éclairé et délivrer en sortie des signaux d'image générés en fonction de la lumière reçue pendant une période d'intégration de lumière prédéterminée; et

des moyens de commande pour commander les moyens d'éclairage et les moyens de captation d'images, caractérisé en ce que lesdits moyens de commande fonctionnent de façon à ce que, lors de chaque cycle d'une succession de cycles de lecture d'images, l'original soit éclairé pendant une période d'éclairage et que les moyens de captation d'images émettent des premier et second signaux d'image correspondant aux première et seconde périodes d'intégration de lumière successives se situant toutes deux dans les limites de ladite période d'éclairage, de telle sorte que le signal d'image correspondant à la seconde période d'intégration de lumière comprenne une partie de signal d'image résiduelle qui provient de l'intégration de la lumière pendant la première période d'intégration de lumière et qui n'avait pas été émise à la fin de ladite première période d'intégration de lumière.

# Fig. 1

# Fig. 2

# Fig. 3

# Fig. 4

## Fig. 5

VO —— 34 —— 35 ——||—— 37 —— 38 ——→ $V_{VO}$

$\phi_{SH}$

36

$\phi_{CLAMP}$ —— 39

24

+ 4V

## Fig. 6

| | 101 | 102 | 103 | 101 | 102 | 103 | | | |
|---|---|---|---|---|---|---|---|---|---|

$\phi_T$   $T_{INTa1}$ | $T_{INTb1}$ | $T_{OUT1}$ | $T_{INTa2}$ | $T_{INTb2}$ | $T_{OUT2}$ | $T_{INTa3}$ | $T_{INTb3}$ | $T_{OUT3}$

$\phi_{FLON}$

$V_{VO}$   $RV_{VOa1}$   $RV_{VOa2}$   $RV_{VOa3}$

$RV_{VOb1}$   $RV_{VOb2}$

$V_{VOa1}$   $V_{VOb1}$   $V_{VOa2}$   $V_{VOb2}$   $V_{VOa3}$   $V_{VOb3}$

EP 0 456 451 B1

# Fig. 7

# Fig. 8

14

# Fig. 9

# Fig. 10